# EUROPÄISCHE PATENTSCHRIFT

(11) **EP 1 502 033 B1**
(45) Veröffentlichungstag und Bekanntmachung des Hinweises auf die Patenterteilung: **18.10.2006**
(21) Anmeldenummer: 03747455.8
(22) Anmeldetag: 06.05.2003
(51) Int. Cl.: F16B 39/26

(54) **MUTTER UND VERFAHREN ZU IHRER HERSTELLUNG**
NUT AND METHOD FOR THE PRODUCTION THEREOF
ECROU ET SON PROCEDE DE PRODUCTION

(30) Priorität: 06.05.2002 DE 10220233
(43) Veröffentlichungstag der Anmeldung: 02.02.2005
(73) Patentinhaber: Metallwarenfabrik Hermann Winker GmbH & Co. KG, 78549 Spaichingen (DE)
(72) Erfinder: WINKER, Alexander, 78549 Spaichingen (DE)
(74) Vertreter: Winter, Martina
(86) Internationale Anmeldenummer: PCT/EP2003/004724
(87) Internationale Veröffentlichungsnummer: WO 2003/093683

(56) Entgegenhaltungen:
- EP-A1- 0 004 185
- CA-A1- 2 236 720
- CA-A1- 2 361 450
- DE-A1- 3 325 255
- FR-A1- 2 408 751
- US-A- 5 112 176
- US-A- 5 597 279

## Beschreibung

Die vorliegende Erfindung betrifft eine Mutter nach dem Oberbegriff des Anspruchs 1 sowie ein Verfahren zu ihrer Herstellung.

Eine gattungsgemäße Mutter ist aus der DE 33 25 255 C2 bekannt. Diese Druckschrift offenbart eine Radmutter aus Metall oder einer Metalllegierung für Nutzfahrzeuge mit einem Mutterkörper und einem als Druckteller ausgebildeten Drehteller. Der Drehteller wird auf den Mutterkörper aufgeschoben und so verankert, dass er zwar auf dem Mutterkörper leicht drehbar ist, aber nicht abgestreift werden kann. Dies wird durch Arretierungsmittel gewährleistet, die am Außenumfang des Mutterkörpers und am Innenumfang des Drehtellers vorgesehen sind und so ineinander greifen, dass der Drehteller unlösbar mit dem Mutterkörper verbunden ist. Diese Arretierungsmittel bestehen im wesentlichen aus in den Mutterkörper und den Drehteller eingearbeiteten Rücksprüngen oder Rillen.

Der Mutterkörper und der Drehteller werden in an sich bekannter Weise durch Massivumformen, wie Kalt- und/oder Warmpressen hergestellt. Die Arretierungsmittel jedoch müssen nachträglich in je einem weiteren Arbeitsgang nach dem Pressen in den Mutterkörper und den Drehteller durch spanende Bearbeitung eingebracht, bspw. eingedreht werden. Diese Art der Herstellung ist jedoch aufwändig und kostenintensiv.

In der kanadischen Patentanmeldung CA 2 236 720 A1 sind eine Mutter und eine mit derselben unverlierbar verbundene Scheibe beschrieben, die jeweils ein Arretierungsmittel in Form eines radial nach außen bzw. nach innen gerichteten umlaufenden Vorsprungs aufweisen, die jedoch jeweils durch spanabhebende Bearbeitung hergestellt sind.

Die europäische Patentanmeldung EP 0 004 185 A1 offenbart eine Mutter mit einer unverlierbar auf einem axialen Hals angeordneten Scheibe. Die drehbare Befestigung der Scheibe wird nach dem Aufstecken der Scheibe auf die Mutter durch radial nach außen gerichtetes Aufbiegen des Halsendes erreicht.

Die Aufgabe der vorliegenden Erfindung besteht somit darin, eine Mutter der oben genannten Art sowie ein Verfahren zu ihrer Herstellung bereitzustellen, welche einfacher und kostengünstiger herstellbar ist.

Die Lösung besteht aus einer Mutter mit den Merkmalen des Anspruch 1 sowie aus einem Herstellungsverfahren mit den Merkmalen des Anspruchs 16. Die erfindungsgemäße Mutter weist einen Mutterkörper mit einem verbreiterten Bund und einen Drehteller auf, die kalt- oder warmumgeformte Bauteile sind, und ein Arretierungsmittel, das als mindestens zwei am Mutterkörper vorgesehene segmentförmige eingepresste bzw. eingestauchte Wulste ausgebildet ist, derart, dass der Drehteller zwischen dem verbreiterten Bund und den segmentförmigen Wulsten angeordnet ist. Damit wird zumindest ein Drehvorgang, nämlich das nachträgliche Bearbeiten des Drehtellers, gespart. Das erfindungsgemäße Herstellungsverfahren sieht vor, dass die segmentförmigen Wulste in den Mutterkörper eingepresst werden. Das erfindungsgemäße Verfahren besteht also lediglich aus Pressvorgängen. Es findet keine spanende Bearbeitung statt. Da das Pressen wesentlich weniger aufwändig ist als eine spanende Bearbeitung, stellt das erfindungsgemäße Verfahren eine besonders einfache, schnelle und kostengünstige Möglichkeit zur Herstellung derartiger Muttern dar, welches daher besonders zur Massenfertigung geeignet ist.

Der Drehteller kann vor oder nach der Herstellung der segmentförmigen Wulste auf den Mutterkörper aufgeschoben werden. Der Drehteller wird im letzteren Fall mit einigem Kraftaufwand, in der Regel maschinell, über die segmentförmigen Wulste geschoben oder gepresst. Dies kann dann von Vorteil sein, wenn die Oberflächen des Mutterkörpers und/oder des Drehtellers mit einer Beschichtung versehen sind, die bspw. als Korrosionsschutz dient. Wenn der Drehteller vor dem Anbringen der segmentförmigen Wulste auf den Mutterkörper aufgeschoben wird, müssen der Mutterkörper und der Drehteller mit derselben Oberflächenbeschichtung versehen werden. Wenn hingegen der Mutterkörper und der Drehteller unterschiedliche Oberflächenbeschichtungen erhalten sollen, muss die Beschichtung vor dem Aufschieben des Drehtellers auf den Mutterkörper vorgenommen werden. Dann müssen die segmentförmigen Wulste jedoch vor dem Beschichten in den Mutterkörper eingepresst werden, da andernfalls die Oberflächenbeschichtung beschädigt würde und bspw. der Korrosionsschutz nicht mehr gewährleistet wäre.

Vorteilhafte Weiterbildungen ergeben sich aus den Unteransprüchen. Das Arretierungsmittel kann aus zwei sich diametral gegenüber liegenden am Mutterkörper angeordneten segmentförmigen Wulsten bestehen. Es ist jedoch auch möglich, drei oder mehr segmentförmige Wulste vorzusehen, die vorzugsweise gleichmäßig um den Umfang des Mutterkörpers verteilt angeordnet sind.

Eine weitere vorteilhafte Ausbildung kann darin bestehen, dass die Länge der segmentförmigen Wulste und der Abstand zwischen benachbarten segmentförmigen Wulsten in Umfangsrichtung gleich bemessen sind. Denkbar ist jedoch auch, dass die Abstände zwischen den segmentförmigen Wulsten kleiner bzw. größer als die Länge der segmentförmigen Wulste bemessen sind. Auf diese Weise können die erforderlichen Kräfte für das Aufschieben des Drucktellers auf den Mutterkörper sehr gut beherrscht werden.

Eine weitere hervorragende Variante in der Ausbildung der segmentförmigen Wulste kann dadurch gegeben sein, die Wulste nur noch als Nocken auszubilden. Dies würde die notwendige Energie beim Aufschieben des Drehtellers weiter reduzieren und den Arbeitsprozess wesentlich erleichtern und effizienter machen.

Der Mutterkörper weist in einer weiteren bevorzugten Weiterbildung einen Basiskörper und einen Halsansatz auf. Am Halsansatz kann eine Konusfläche vorgesehen sein, die den Halsansatz abschließt; dies ist jedoch nicht zwingend notwendig. Es kann auch Ausführungsformen ohne Konusfläche geben. Die segmentförmigen Wulste sind vorzugsweise am Halsansatz ausgebildet. In der Konusfläche und/oder im Halsansatz kann eine Einkerbung eingepresst sein, welche an ihrer dem Drehteller zugewandten Kante von den segmentförmigen Wulsten begrenzt ist. Es gibt auch andere Möglichkeiten, die segmentförmigen Wulste anzupressen, bspw. in dem der Halsansatz beim Pressen des Mutterkörpers an seiner Außenseite mit einem Materialüberhang, bspw. mit einer leicht konischen Kontur, versehen wird, welcher dann zu den segmentförmigen Wulsten gepresst wird.

Der Drehteller weist vorzugsweise entlang seiner Innenfläche einen zylindrischen Flächenbereich auf, welcher am Halsansatz des Mutterkörpers anliegt. Der Drehteller kann aber auch entlang seiner Innenfläche einen leicht konischen Flächenbereich aufweisen. Er kann ferner an dem später dem Basiskörper zugewandten Ende des zylindrischen bzw. leicht konischen Flächenbereichs eine Schräge oder Fase aufweisen. Dies ist insbesondere dann von Vorteil, wenn der Drehteller nach dem Pressen der segmentförmigen Wulste auf den Halsansatz des Mutterkörpers aufgeschoben wird. Die leicht konische Ausgestaltung bzw. die Schräge oder Fase erleichtern hierbei das Aufschieben des Drehtellers.

Eine weitere bevorzugte Weiterbildung besteht darin, dass der verbreiterte Bund an seiner dem Halsansatz zugewandten Seite eine konusförmige Unterseite und der Drehteller entlang seiner Innenfläche einen konusförmigen Flächenbereich aufweist, welcher mit der konusförmigen Unterseite des verbreiterten Bundes in Kontakt steht. Die konusförmige Unterseite und der konusförmige Flächenbereich stellen also gegenseitige Reibflächen dar, gegen die der Drehteller drehbar ist. Der Drehteller kann im Querschnitt in etwa trapezförmig sein. Der Basiskörper kann ferner eine Kappe aufweisen.

Die erfindungsgemäße Mutter ist bspw. zur Verwendung als Radmutter für Kraftfahrzeuge geeignet.

Ein Ausführungsbeispiel der vorliegenden Erfindung wird im Folgenden anhand der beigefügten Zeichnungen näher erläutert. Es zeigen:
- Figur 1: eine schematische, nicht maßstabsgetreue Seitenansicht eines Mutterkörpers für eine erfindungsgemäße Mutter;
- Figur 2: eine schematische, nicht maßstabsgetreue, teilweise geschnittene Seitenansicht eines Drehtellers für den in Figur 1 gezeigten Mutterkörper;
- Figur 3 a: eine schematische, nicht maßstabsgetreue, teilweise geschnittene Seitenansicht einer erfindungsgemäßen Mutter;

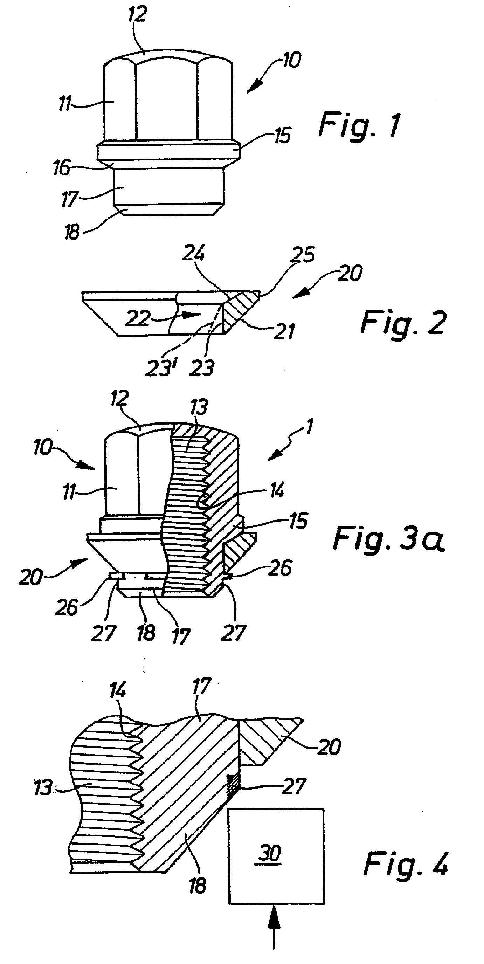

- Figur 3 b: eine schematische, nicht maßstabsgetreue Darstellung der Mutter gemäß Figur 3 a in Ansicht;
- Figur 3 c: ein weiteres Ausführungsbeispiel einer erfindungsgemäßen Mutter in schematischer, nicht maßstabsgetreuer Darstellung in Ansicht;
- Figur 3 d: die Mutter gemäß Figur 3 c in schematischer, nicht maßstabsgetreuer Darstellung in Ansicht gemäß Pfeilrichtung A in Figur 3 c;

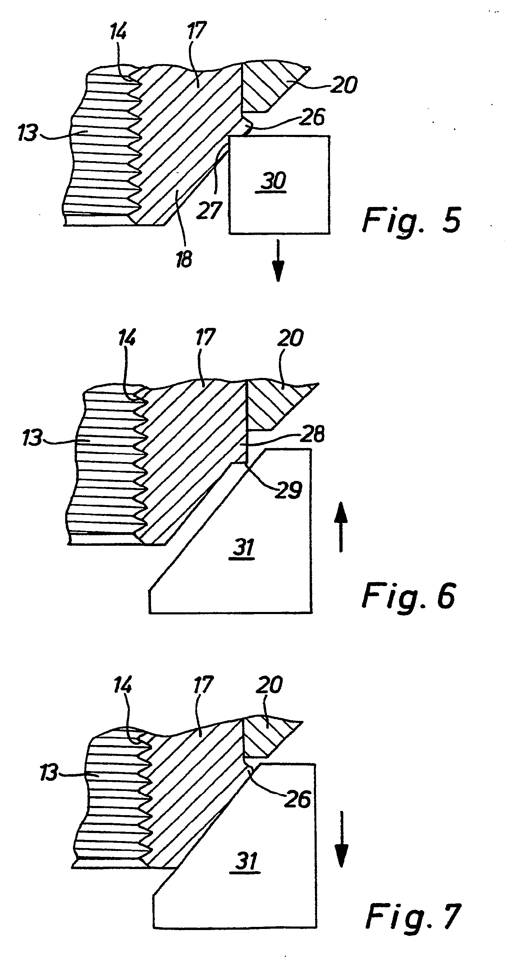

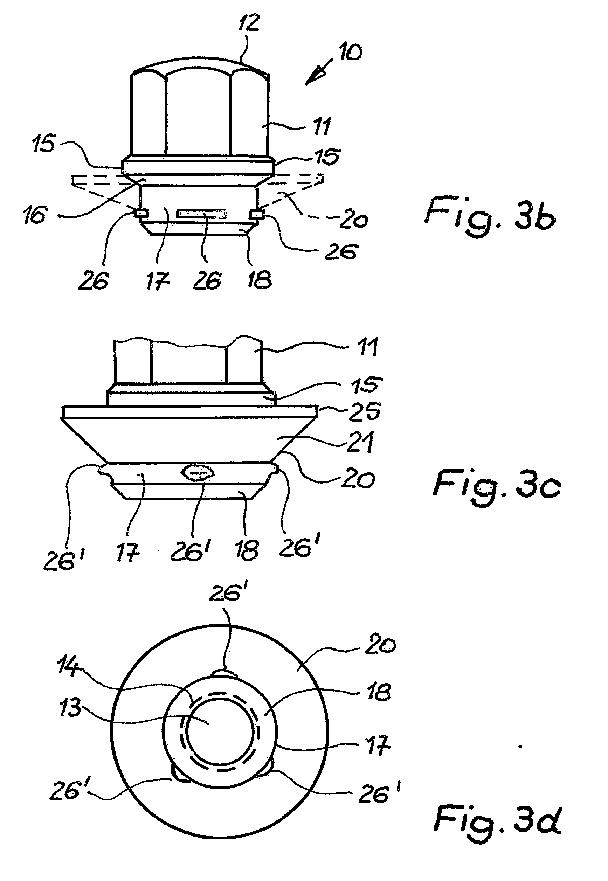

- Figuren 4 und 5: eine schematische Darstellung der Verfahrensschritte zur Herstellung der in Figur 3 gezeigten Mutter gemäß einer ersten Ausführungsform des erfindungs-gemäßen Verfahrens;
- Figuren 6 und 7: eine schematische Darstellung der Verfahrensschritte zur Herstellung der in Figur 3 gezeigten Mutter gemäß einer zweiten Ausführungsform des erfindungs-gemäßen Verfahrens.

Die aus den Figuren 1 bis 3 a, 3 b, 3 c, 3 d ersichtlichen Ausführungsbeispiele einer erfindungsgemäßen Sicherungsmutter 1 dienen als Radmutter für Kraftfahrzeuge und bestehen aus einem Mutterkörper 10 und einem Drehteller 20. Der Mutterkörper 10 weist einen Basiskörper 11 auf, der im Ausführungsbeispiel auf der vom Rad abgewandten Seite mit einer Kappe 12 versehen ist. Der Mutterkörper 10 weist ferner eine Bohrung 13 mit einem Innengewinde 14 auf. Es ist selbstverständlich auch möglich, die Kappe 12 wegzulassen, so dass der Mutterkörper 10 eine durchgehende Bohrung 13 aufweist. Der Basiskörper 11 ist im Ausführungsbeispiel als Sechskantkörper für einen entsprechenden Radschlüssel ausgestaltet, aber die diesbezügliche Ausgestaltung des Basiskörpers 11 ist selbstverständlich beliebig wählbar.

An der dem Rad zugewandten Seite des Basiskörpers 11 weist der Mutterkörper 10 einen verbreiterten Bund 15 mit einer konischen Unterseite 16 auf, die als Kontaktfläche für die Innenfläche des Drehtellers 20 dient (siehe unten). An diese konische Unterseite 16 schließt sich ein Halsansatz 17 an. Den Abschluss des Halsansatzes 17 bildet eine Konusfläche 18.

Der Drehteller 20 ist im Querschnitt etwa trapezförmig ausgebildet und weist eine konusförmige Außenfläche 21 auf. Die Innenfläche 22 des Drehtellers 20 besteht aus einem zylinderförmigen Flächenbereich 23, der in Kontakt mit dem Halsansatz 17 des Mutterkörpers 10 steht und einem konusförmigen Flächenbereich 24, der in Kontakt mit der konischen Unterseite 16 des verbreiterten Bunds 15 des Mutterkörpers 10 steht. Der konusförmige Flächenbereich 24 ist an seiner Außenkante von einem schmalen Bund 25 begrenzt.

Die gestrichelte Linie in Figur 2 deutet an, dass statt dem zylinderförmigen Flächenbereich 23 ein leicht konischer Flächenbereich 23' vorgesehen sein kann. Nicht dargestellt ist, dass am oberen Ende des zylindrischen Flächenbereichs 23 oder des leicht konischen Flächenbereichs 23', im Ausführungsbeispiel also am Übergang vom zylindrischen 23 oder leicht konischen Flächenbereich 23' zum konusförmigen Flächenbereich 24, eine kleine Schräge oder Fase angebracht sein kann. Diese Ausgestaltungen erleichtern das Aufschieben des Drehtellers 20 auf den Halsansatz 17 nach dem Anbringen von segmentförmigen Wulsten 26 (siehe dazu unten). Der Drehteller 20 und der Mutterkörper 10 werden beide in an sich bekannter Weise durch Massivumformen wie Kalt- und/oder Warmpressen hergestellt. Sowohl die Außenfläche des Halsansatzes 17 als auch der zylinderförmige Flächenbereich 23 oder der leicht konische Flächenbereich 23' des Drehtellers 20 sind nach dem Pressvorgang völlig glatt. Zur Montage der Mutter 10 wird der Drehteller 20 auf den Halsansatz 17 des Mutterkörpers 10 aufgeschoben, bis der konusförmige Flächenbereich 24 des Drehtellers 20 an der Konusfläche 18 anliegt. Ohne zusätzliche Sicherung könnte der Drehteller 20 allerdings wieder vom Halsansatz 17 wieder abgestreift werden. Als derartige Sicherung sind erfindungsgemäß zwischen Drehteller 20 und Konusfläche 18 segmentförmige Wulste 26 vorgesehen, auf welche die dem Rad zugewandte Seite des Drehtellers 20 aufsitzt, so dass er nicht vom Halsansatz 17 abgestreift werden kann.

Der Drehteller 20 kann vor oder nach dem Anbringen der segmentförmigen Wulste 26 auf den Halsansatz 17 aufgeschoben werden. Der Drehteller 20 wird im letzteren Fall mit einigem Kraftaufwand, in der Regel maschinell, über die segmentförmigen Wulste 26 geschoben oder gepresst. Dabei ist die Ausgestaltung des Drehtellers mit einem leicht konischen Flächenbereich 23' und/oder das Anbringen einer Schräge oder Phase am oberen Ende dieses Flächenbereichs von Vorteil, weil dadurch das Aufschieben des Drehtellers 20 erleichtert wird. Wenn ein leicht konischer Flächenbereich 23' vorgesehen wird, so ist dessen Innendurchmesser oben, also an dem dem Basiskörper 11 zugewandten Ende, gleich oder etwas größer als der Durchmesser der segmentförmigen Wulste 26. Der Innendurchmesser unten, also an dem den segmentförmigen Wulsten 26 zugewandten Ende ist kleiner als der Durchmesser der segmentförmigen Wulste 26.

In der Figur 3 b sind die am Halsansatz 17 des Mutterkörpers 11 ausgebildeten segmentförmigen Wulste 26 deutlich erkennbar dargestellt. Im Ausführungsbeispiel der Figur 3 b sind vier gleichmäßig um den Umfang des Halsansatzes 17 verteilt angeordnete segmentförmige Wulste 26 dargestellt. Es können aber auch nur zwei oder drei oder mehr als vier segmentförmige Wulste 26 vorgesehen sein. Im Sinne einer klaren Darstellung der segmentförmigen Wulste 26 ist der Drehteller 20 nur gestrichelt angedeutet.

In den Figuren 3 c und 3 d ist eine vorteilhafte Variante der segmentförmigen Wulste 26 in Form von kleinen Nocken 26' veranschaulicht, die durch einen einfachen Stauchvorgang oder Pressvorgang mit einem geeigneten Werkzeug (siehe unten) in den Halsansatz 17 bzw. in den Bereich des Konus 18 eingebracht werden können.

Für die Herstellung eines derartig ausgebildeten Arretierungsmittels für den Drehteller 20 wie die Nocken 26' ist ein energiesparender und damit ein wirtschaftlich günstiger Arbeitsprozess möglich, weil sehr wenig Material bewegt werden muss und damit nur ein geringfügiger Umformungs-vorgang an der Mutter erforderlich ist.

Die segmentförmigen Wulste 26 können beim Pressen des Mutterkörpers 10 direkt in diesen eingeformt werden. Sie können aber auch durch eine in die Konusfläche 18 und/oder in den Halsansatz 17 eingepresste Stauchung hergestellt werden, wie es in den Figuren 4 und 5 schematisch dargestellt ist. Mittels eines Werkzeugs 30, bspw. einer Matrize, werden im Ausführungsbeispiel etwa rechteckige Einkerbungen 27 in die Konusfläche 18 und/oder den Halsansatz 17 eingepresst. Das überschüssige, durch den Pressvorgang aus den Einkerbungen 27 herausgepresste Material bildet oberhalb der Einkerbungen 27 Stauchungen oder die segmentförmigen Wulste 26 bzw. 26'. Diese begrenzen also die Einkerbungen 27 an ihren den Drehteller 20 zugewandten Kanten.

Eine weitere Möglichkeit zum Einpressen der segmentförmigen Wulste 26 bzw. 26' in den Halsansatz 17 ist in den Figuren 6 und 7 schematisch dargestellt. Hierbei wird beim Pressen des Mutterkörpers 10 ein Materialüberhang 28 mit eingeformt, der in seiner Außenkontur leicht konisch ist oder an seinem dem Basiskörper 11 zugewandten Ende mit einer kleinen Phase 29 oder Abschrägung versehen ist. Der Materialüberhang 28 wird vorzugsweise am Übergang von der Konusfläche 18 zum Halsansatz 17 eingeformt. Dieser Materialüberhang 28 wird mit einem geeigneten Werkzeug 31 in Richtung des Basiskörpers 11 nach oben gepresst, so dass - im Ausführungsbeispiel am Halsansatz 17 - die segmentförmigen Wulste 26 bzw. Nocken 26' gebildet werden.

Das erfindungsgemäße Verfahren zur Herstellung der beschriebenen Mutter 1 besteht somit lediglich aus Pressvorgängen und ist daher einfach, kostengünstig und für die Massenherstellung derartiger Muttern, insbesondere für in großen Stückzahlen produzierter Radmuttern für Kraftfahrzeuge geeignet.

## Patentansprüche

1. Mutter (1) mit einem Mutterkörper (10) mit einem verbreiterten Bund (15) und einem auf dem Mutterkörper (10) unverlierbar angebrachten Drehteller (20), wobei der Drehteller (20) auf den Mutterkörper (10) aufgeschoben und mittels eines Arretierungsmittels unverlierbar gehalten ist, **dadurch gekennzeichnet, dass** der Mutterkörper (10) und der Drehteller (20) kalt- oder warmumgeformte Bauteile sind, und dass das Arretierungsmittel als mindestens zwei am Mutterkörper (10) vorgesehene segmentförmige eingepresste bzw. eingestauchte Wulste (26, 26') ausgebildet ist, derart, dass der Drehteller (20) zwischen dem verbreiterten Bund (15) und den segmentförmigen Wulsten (26, 26') angeordnet ist.

2. Mutter nach Anspruch 1, **dadurch gekennzeichnet, dass** zwei segmentförmige Wulste (26, 26') sich diametral gegenüberliegend am Mutterkörper (10) angeordnet sind.

3. Mutter nach Anspruch 1, **dadurch gekennzeichnet, dass** drei oder mehr segmentförmige Wulste (26, 26') gleichmäßig um den Umfang des Mutterkörpers (10) verteilt angeordnet sind.

4. Mutter nach einem der vorhergehenden Ansprüche, **dadurch gekennzeichnet, dass** die Länge der segmentförmigen Wulste (26) und der Abstand zwischen benachbarten segmentförmigen Wulsten (26) in Umfangrichtung gleich bemessen sind.

5. Mutter nach einem der vorhergehenden Ansprüche 1 bis 3, **dadurch gekennzeichnet, dass** die Abstände zwischen den segmentförmigen Wulsten (26) kleiner oder größer als die Länge der segmentförmigen Wulste (26) bemessen sind.

6. Mutter nach einem der vorhergehenden Ansprüche, **dadurch gekennzeichnet, dass** die segmentförmigen Wulste (26) als Nocken (26') ausgebildet sind.

7. Mutter nach einem der vorhergehenden Ansprüche, **dadurch gekennzeichnet, dass** der Mutterkörper (10) einen Basiskörper (11) und einen Halsansatz (17) aufweist und der Drehteller (20) auf dem Halsansatz (17) angebracht ist.

8. Mutter nach Anspruch 7, **dadurch gekennzeichnet, dass** eine Konusfläche (18) den Halsansatz (17) abschließt.

9. Mutter nach Anspruch 8, **dadurch gekennzeichnet, dass** die segmentförmigen Wulste (26, 26') am Übergang der Konusfläche (18) zum Halsansatz (17) ausgebildet sind.

10. Mutter nach einem der Ansprüche 8 oder 9, **dadurch gekennzeichnet, dass** in der Konusfläche (18) und/oder am Halsansatz (17) eine Einkerbung (27) eingepresst ist, welche an ihrer dem Drehteller (20) zugewandten Kante von den segmentförmigen Wulsten (26) begrenzt ist.

11. Mutter nach einem der Ansprüche 7 bis 10, **dadurch gekennzeichnet, dass** der verbreiterte Bund (15) an seiner dem Halsansatz (17) zugewandten Seite eine konusförmige Unterseite (16) und der Drehteller (20) entlang seiner Innenfläche (22) einen konusförmigen Flächenbereich (24) aufweist, welcher mit der konusförmigen Unterseite (16) des verbreiterten Bundes (15) in Kontakt steht.

12. Mutter nach einem der Ansprüche 7 bis 11, **dadurch gekennzeichnet, dass** der Drehteller (20) entlang seiner Innenfläche (22) einen zylindrischen (23) oder leicht konischen Flächenbereich (23') aufweist, welcher am Halsansatz (17) anliegt.

13. Mutter nach einem der vorhergehenden Ansprüche, **dadurch gekennzeichnet, dass** der Drehteller (20) im Querschnitt in etwa trapezförmig ist.

14. Mutter nach den Ansprüchen 7 bis 13, **dadurch gekennzeichnet, dass** der Basiskörper (11) eine Kappe (12) aufweist.

15. Mutter nach einem der vorhergehenden Ansprüche, nämlich eine Radmutter für Kraftfahrzeuge.

16. Verfahren zur Herstellung einer Mutter mit einem Mutterkörper (10) mit einem verbreiterten Bund (15) und einem auf dem Mutterkörper (10) drehbar und unverlierbar angebrachten Drehteller (20), wobei der Mutterkörper (10) und der Drehteller (20) durch Warm- oder Kaltumformen hergestellt werden und der Drehteller (20) auf den Mutterkörper (10) aufgeschoben und mittels eines Arretierungsmittels unverlierbar gehalten wird, **dadurch gekennzeichnet, dass** vor oder nach dem Aufschieben des Drehtellers (20) als Arretierungsmittel mindestens zwei segmentförmige Wulste (26, 26') in den Mutterkörper (10) eingepresst werden oder dass bei der Herstellung des Mutterkörpers (10) mindestens zwei segmentförmige Wulste (26, 26') einstückig in den Mutterkörper (10) eingestaucht werden, so dass der Drehteller (20) zwischen dem verbreiterten Bund (15) und den segmentförmigen Wulsten (26, 26') positioniert wird.

17. Verfahren nach Anspruch 16, **dadurch gekennzeichnet, dass** beim Pressen des Mutterkörpers (10) ein Materialüberhang (28) eingearbeitet wird, welcher später zu den segmentförmigen Wulsten (26, 26') gepresst wird.

18. Verfahren nach Anspruch 16 oder 17, **dadurch gekennzeichnet, dass** in den Mutterkörper (10) eine Einkerbung (27) eingepresst wird, welcher an ihrer dem Drehteller (20) zugewandten Kante von den segmentförmigen Wulsten (26, 26') begrenzt wird.

19. Verfahren nach einem der Ansprüche 16 bis 18, **dadurch gekennzeichnet, dass** der Mutterkörper (10) einen Basiskörper (11) und einen Halsansatz (17) aufweist und der Drehteller (20) auf den Halsansatz (17) angebracht wird.

20. Verfahren nach Anspruch 19, **dadurch gekennzeichnet, dass** die segmentförmigen Wulste (26, 26') am Halsansatz (17) ausgebildet werden.

21. Verfahren nach Anspruch 18, **dadurch gekennzeichnet, dass** am Mutterkörper (10) eine Konusfläche (18) vorgesehen ist und die Einkerbung (27) in die Konusfläche (18) und/oder den Halsansatz (17) eingepresst wird.

22. Verfahren nach Anspruch 21, **dadurch gekennzeichnet, dass** der Materialüberhang (28) am Übergang von der Konusfläche (18) und Halsansatz (17) ausgebildet wird.

## Claims

1. A nut (1) having a nut body (10) with a widened collar (15) and a rotary disc (20) which is fitted in a captive manner on the nut body (10), the rotary disc (20) being pushed onto the nut body (10) and retained in a captive manner by an arresting means, **characterized in that** the nut body (10) and the rotary disc (20) are cold- or hot-formed components, and **in that** the arresting means is formed as at least two segment-like pressed-in or compressed-in beads (26, 26') provided on the nut body (10), such that the rotary disc (20) is arranged between the widened collar (15) and the segment-like beads (26, 26').

2. Nut according to Claim 1, **characterized in that** two segment-like beads (26, 26') are arranged diametrically opposite one another on the nut body (10).

3. Nut according to Claim 1, **characterized in that** three or more segment-like beads (26, 26') are distributed uniformly around the circumference of the nut body (10).

4. Nut according to one of the preceding claims, **characterized in that** the length of the segment-like beads (26) and the spacing between adjacent segment-like beads (26) in the circumferential direction are of equal dimensions.

5. Nut according to one of the preceding Claims 1 to 3, **characterized in that** the spacings between the segment-like beads (26) are dimensioned to be smaller or greater than the length of the segment-like beads (26).

6. Nut according to one of the preceding claims, **characterized in that** the segment-like beads (26) are designed as protuberances (26').

7. Nut according to one of the preceding claims, **characterized in that** the nut body (10) has a basic body (11) and a neck extension (17) and the rotary plate (20) is fitted on the neck extension (17).

8. Nut according to Claim 7, **characterized in that** a conical surface (18) terminates the neck extension (17).

9. Nut according to Claim 8, **characterized in that** the segment-like beads (26, 26') are formed at the transition from the conical surface (18) to the neck extension (17).

10. Nut according to either of Claims 8 and 9, **characterized in that** an indent (27) is pressed into the conical surface (18) and/or the neck extension (17), this indent being bounded, on its edge which is directed towards the rotary disc (20), by the segment-like beads (26).

11. Nut according to one of Claims 7 to 10, **characterized in that** the widened collar (15), on its side which is directed towards the neck extension (17), has a conical underside (16) and the rotary disc (20), along its inner surface (22), has a conical surface region (24), which is in contact with the conical underside (16) of the widened collar (15).

12. Nut according to one of Claims 7 to 11, **characterized in that** the rotary disc (20), along its inner surface (22), has a cylindrical (23) or slightly conical (23') surface region which butts against the neck extension (17).

13. Nut according to one of the preceding claims, **characterized in that** the rotary disc (20) is approximately trapezoidal in cross section.

14. Nut according to Claims 7 to 13, **characterized in that** the basic body (11) has a cap (12).

15. Nut according to one of the preceding claims, namely a wheel nut for motor vehicles.

16. Method of producing a nut having a nut body (10) with a widened collar (15) and a rotary disc (20) which is fitted in a rotatable and captive manner on the nut body (10), the nut body (10) and the rotary disc (20) being produced by hot or cold forming and the rotary disc (20) being pushed onto the nut body (10) and retained in a captive manner by an arresting means, **characterized in that**, as the arresting means, before or after the rotary disc (20) has been pushed on, at least two segment-like beads (26, 26') are pressed into the nut body (10), or **in that**, during production of the nut body (10), at least two segment-like beads (26, 26') are integrally compressed into the nut body (10), with the result that the rotary disc (20) is positioned between the widened collar (15) and the segment-like beads (26, 26').

17. Method according to Claim 16, **characterized in that**, during the pressing operation of the nut body (10), a material overhang (28) is incorporated, and this is later pressed to form the segment-like beads (26, 26').

18. Method according to Claim 16 or 17, **characterized in that** an indent (27) is pressed into the nut body (10), this indent being bounded, on its edge which is directed towards the rotary disc (20), by the segment-like beads (26, 26').

19. Method according to one of Claims 16 to 18, **characterized in that** the nut body (10) has a basic body (11) and a neck extension (17) and the rotary disc (20) is fitted onto the neck extension (17).

20. Method according to Claim 19, **characterized in that** the segment-like beads (26, 26') are formed on the neck extension (17).

21. Method according to Claim 18, **characterized in that** a conical surface (18) is provided on the nut body (10) and the indent (27) is pressed into the conical surface (18) and/or the neck extension (17).

22. Method according to Claim 21, **characterized in that** the material overhang (28) is formed on the transition between the conical surface (18) and neck extension (17).

## Revendications

1. Ecrou (1) avec un corps d'écrou (10) avec un épaulement élargi (15) et avec un contre-écrou rotatif (20), monté de façon imperdable sur le corps d'écrou (10), le contre-écrou rotatif (20) étant enfoncé sur le corps d'écrou (10) et maintenu de façon imperdable par un moyen de blocage, **caractérisé en ce que** le corps d'écrou (10) et le contre-écrou rotatif (20) sont des pièces estampées à froid ou à chaud et **en ce que** le moyen de blocage est conçu sous la forme d'au moins deux bourrelets (26, 26') estampés ou refoulés prévus sur le corps d'écrou (10) de façon telle que le contre-écrou rotatif (20) soit placé entre l'épaulement élargi (15) et les bourrelets en forme de segments (26, 26').

2. Ecrou selon la revendication 1, **caractérisé en ce que** deux bourrelets en forme de segments (26, 26') sont diamétralement opposés sur le corps d'écrou (10).

3. Ecrou selon la revendication 1, **caractérisé en ce que** trois bourrelets en forme de segments (26, 26') ou plus sont régulièrement répartis sur la périphérie du corps d'écrou (10).

4. Ecrou selon l'une quelconque des revendications précédentes, **caractérisé en ce que** la longueur des bourrelets en forme de segments (26) et la distance entre des bourrelets en forme de segments (26) voisins ont les mêmes dimensions dans le sens périphérique.

5. Ecrou selon l'une quelconque des revendications 1 à 3, **caractérisé en ce que** les distances entre les bourrelets en forme de segments (26) sont inférieures ou supérieures à la longueur des bourrelets en forme de segments (26).

6. Ecrou selon l'une quelconque des revendications précédentes, **caractérisé en ce que** les bourrelets en forme de segments (26) sont conçus sous la forme d'ergots (26').

7. Ecrou selon l'une quelconque des revendications précédentes, **caractérisé en ce que** le corps d'écrou (10) comporte un corps de base (11) et un col (17) et **en ce que** le contre-écrou rotatif (20) est monté sur le col (17).

8. Ecrou selon la revendication 7, **caractérisé en ce qu'**une surface conique (18) termine le col (17).

9. Ecrou selon la revendication 8, **caractérisé en ce que** les bourrelets en forme de segments (26, 26') sont conçus sur le passage de la surface conique (18) vers le col (17).

10. Ecrou selon l'une quelconque des revendications 8 ou 9, **caractérisé en ce qu'**une rainure (27), qui sur son arête qui fait face au contre-écrou rotatif (20) est délimitée par les bourrelets en forme de segments (26), est estampée dans la surface conique (18) et/ou sur le col (17).

11. Ecrou selon l'une quelconque des revendications 7 à 10, **caractérisé en ce que** sur son côté qui fait face au col (17), l'épaulement élargi (15) comporte une face inférieure conique (16) et **en ce que** le long de sa surface intérieure (22), le contre-écrou rotatif (20) comporte un méplat conique (24) qui est en contact avec la face inférieure conique (16) de l'épaulement élargi (15).

12. Ecrou selon l'une quelconque des revendications 7 à 11, **caractérisé en ce que** le long de sa surface intérieure (22), le contre-écrou rotatif (20) comporte un méplat cylindrique (23) ou légèrement conique (23'), qui s'appuie sur le col (17).

13. Ecrou selon l'une quelconque des revendications précédentes, **caractérisé en ce que** le contre-écrou rotatif (20) a une section transversale approximativement trapézoïdale.

14. Ecrou selon l'une quelconque des revendications 7 à 13, **caractérisé en ce que** le corps de base (11) comporte un capuchon (12).

15. Ecrou selon l'une quelconque des revendications précédentes, à savoir un écrou de roue pour un véhicule automobile.

16. Procédé de fabrication d'un écrou avec un corps d'écrou (10) avec un épaulement élargi (15) et avec un contre-écrou rotatif (20) monté de façon rotative et imperdable sur le corps d'écrou (10), dans lequel on fabrique le corps d'écrou (10) et le contre-écrou rotatif (20) par estampage à chaud ou à froid et on enfonce le contre-écrou rotatif (20) sur le corps d'écrou (10) et on le maintient de façon imperdable à l'aide d'un moyen de blocage, **caractérisé en ce qu'**avant ou après avoir enfoncé le contre-écrou rotatif (20), on estampe en tant que moyens de blocage au moins deux bourrelets en forme de segments (26, 26') dans le corps d'écrou (10) ou **en ce que** lors de la fabrication du corps d'écrou (10) on refoule au moins deux bourrelets en forme de segments (26, 26') en monobloc dans le corps d'écrou (10), pour que le contre-écrou rotatif (20) soit positionné entre l'épaulement élargi (15) et les bourrelets en forme de segments (26, 26').

17. Procédé selon la revendication 16, **caractérisé en ce que** lors de l'estampage du corps d'écrou (10), on usine une saillie de matière (28) que l'on presse ultérieurement pour former les bourrelets en forme de segments (26, 26').

18. Procédé selon la revendication 16 ou 17, **caractérisé en ce qu'**on estampe dans le corps d'écrou (10) une rainure (27) qui sur son arête qui fait face au contre-écrou rotatif (20) est délimitée par les bourrelets en forme de segments (26, 26').

19. Procédé selon l'une quelconque des revendications 16 à 18, **caractérisé en ce que** le corps d'écrou (10) comporte un corps de base (11) et un col (17) et **en ce qu'**on monte le contre-écrou rotatif (20) sur le col (17).

20. Procédé selon la revendication 19, **caractérisé en ce qu'**on forme les bourrelets en forme de segments (26, 26') sur le col (17).

21. Procédé selon la revendication 18, **caractérisé en ce qu'**une surface conique (18) est prévue sur le corps d'écrou (10) et **en ce qu'**on estampe la rainure (27) dans la surface conique (18) et/ou dans le col (17).

22. Procédé selon la revendication 21, **caractérisé en ce qu'**on forme la saillie de matière (28) sur le passage de la surface conique (18) vers le col (17).
